**Europäisches Patentamt**

**European Patent Office**

**Office européen des brevets**

(19)

(11) Publication number : **0 280 569 B1**

## (12) EUROPEAN PATENT SPECIFICATION

(45) Date of publication of patent specification :
29.01.92 Bulletin 92/05

(51) Int. Cl.⁵ : **G11B 15/08,** G11B 23/04, H04N 5/782

(21) Application number : **88301668.5**

(22) Date of filing : **26.02.88**

(54) **Magnetic recording and reproducing apparatus.**

(30) Priority : **27.02.87 JP 45589/87**

(43) Date of publication of application :
**31.08.88 Bulletin 88/35**

(45) Publication of the grant of the patent :
**29.01.92 Bulletin 92/05**

(84) Designated Contracting States :
**DE GB**

(56) References cited :
EP-A- 0 045 327
DE-A- 3 315 167
GB-A- 2 117 962

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **Takemura, Shigeo The Saedo Dormitory**
**749-1 Saedo Chou Midori-ku Tokohama City Kanagawa 226 (JP)**
Inventor : **Taguchi, Katsuyuki**
**20-1-1124 Higashinakaburi 2-Chome Hirakata City Osaka 573 (JP)**

(74) Representative : **Crawford, Andrew Birkby et al**
**A.A. THORNTON & CO. Northumberland House 303-306 High Holborn**
**London WC1V 7LE (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a magnetic recording and reproducing apparatus such as a rotary head type digital audio tape recorder, and more particularly to a braking device for operating and releasing a reel brake used for fixing and detaching a tape cassette with respect to a tape running device of the magnetic recording and reproducing apparatus.

Fig. 5 shows a constitution of a conventional magnetic recording and reproducing apparatus. In the apparatus of Fig. 5, a tape cassette detecting device 1 detects that a tape cassette has been fixed in a tape running device and a reel braking device 2 operates and releases the reel brake.

Operations of the above conventional magnetic recording and reproducing apparatus will now be explained. In Fig 5, when a user fixes a tape cassette in the tape playing device, a tape cassette fixing switch is closed and a reel braking device 2 causes the brake to operate. When a user detaches the tape cassette from the tape running device, the tape cassette fixing switch 1 is opened and the reel braking device 2 causes the brake to be released.

However, in the conventional apparatus, a problem arises that when a user detaches a tape cassette from the tape running device, the tape cassette is opened before the tape cassette is detached completely from the tape running device, due to variation in detection accuracy of the tape cassette fixing switch 1, the reel brake is thus released causing unnecessary sagging or positional deviation of the tape in the cassette itself.

Embodiments of the present invention solve conventional problems such as above and provide a magnetic recording and reproducing apparatus which ensures precise timing of operation and releasing of the reel brake by using a tape leader end and a tape trailer end detecting device instead of the tape cassette fixing switch 1.

The present invention provides a magnetic recording and reproducing apparatus comprising: a first detecting device and a second detecting device utilising light transmission to detect a transparent leader or trailer tape portion in contrast to the non-transparent magnetic tape portion, the transparent portions having a length such that said detecting devices cannot simultaneously detect a transparent portion; characterised by a control device which operates the reel brake when one of said detecting devices detects the magnetic tape portion during the insertion of a tape cassette into a tape running device, and which releases the reel brake when both of the detecting devices do not detect the magnetic tape portion, which state is indicative of a removed cassette.

Consequently, according to the present invention, when a user fixes a tape cassette into a tape playing device, and when the tape leader end detecting device or the tape trailer end detecting device has detected the magnetic tape portion, the reel brake is operated.

Or, when a user detaches the tape cassette out of the tape running device, it becomes possible to release the reel brake at a time when neither the tape leader end detecting device nor the tape trailer end detecting device detects the magnetic tape portion.

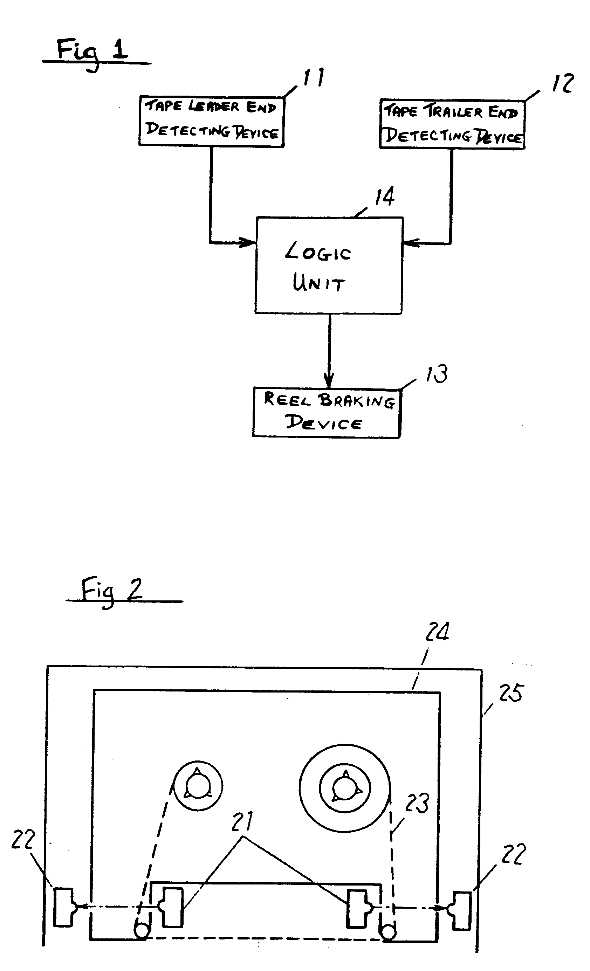

Fig. 1 is a block diagram showing an embodiment of the present invention, Fig. 2 is a schematic diagram showing constitutions of the tape leader end detecting device and the tape trailer end detecting device of Fig. 1, Fig. 3 and Fig. 4 are flowcharts showing operations of an embodiment of the present invention, and Fig. 5 is a block diagram of a conventional magnetic recording and reproducting apparatus.

Fig. 1 is a block diagram showing a constitution of an embodiment of the present invention. In the embodiment of Fig. 1, a tape leader end detecting device 11 utilises light transmission to detect the transparent leader tape portion of the leader end of a tape and a tape trailer end detecting device 12 utilises light transmission to detect the transparent leader tape portion of the trailer end portion of a tape. A reel braking device 13 operates and releases the reel brake and a logic unit 14 drives and controls the reel braking device 13 according to output status of the tape leader end detecting device and the tape trailer end detecting device.

Fig. 2 is a schematic diagram showing the constitutions of a tape leader end detecting device 11 and a tape trailer end detecting device. Fig. 2 shows a photo emitter 21 installed on a tape running device 25 and a photo sensor 22 installed on the tape running device 25. Magnetic recording tape 23 has a transparent leader tape at the leader end and trailer end portions. This leader tape has such a length that the tape leader end detecting device 11 and the tape trailer end detecting device 12 cannot detect simultaneously. A tape cassette is designated by the numeral 24. Next, operations of the tape leader end detecting device will be explained. In the same Fig. 2 when the tape 23 present between the photo emitter 21 and the photo sensor 22 is a non-transparent magnetic part, the light from the photo emitter 21 does not reach the photo sensor 22, and it becomes possible to detect that the tape is a magnetic part and that the tape cassette 24 is fixed in the tape running device 25. And, when the tape 23 at that position is a transparent leader tape, or when tape 23 is not present, the light from the photo emitter 21 reaches the photo sensor 22, and it becomes possible to detect that the tape 23 is in a state of leader end or of trailer end or that the tape cassette 24 is detached from the tape running device 25.

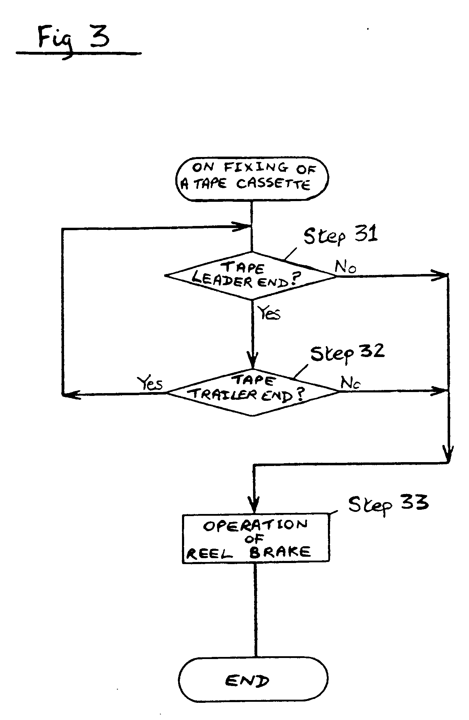

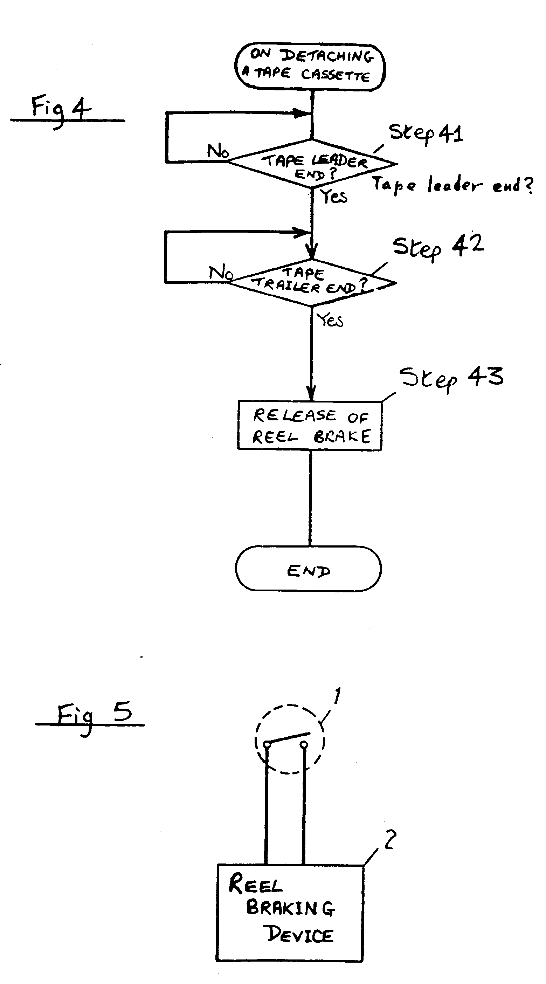

Fig. 3 and Fig. 4 are flowcharts showing operations of the above embodiment. Fig. 3 shows control of the reel braking device 13 when a tape cassette 24 is to be fixed in the tape running device 25. In the step 31 when the tape leader end detecting device 11 does not detect the presence of the tape leader end it is assumed that the tape cassette 24 has been fixed in the tape running device 25 and the flow advances to step 33. In the step 32, with respect to a case where the tape cassette 24 is fixed in a state of leader end, when the tape trailer end detecting device 12 does not detect the presence of the tape trailer end, the step 32 advances to the step 33 likewise. When both the tape leader end and the trailer end are detected in the steps 31, 32, then the steps 31, 32 are repeated until the fixing of the tape cassette 24 is completed. In step 33, the logic unit 14 controls the brake operation of the reel braking device 13.

Fig. 4 shows control of the reel braking device 13 when the tape cassette 24 is to be detached from the tape running device 25. In steps 41, 42 when both the tape leader end detecting device 11 and the tape trailer end detecting device 12 detect the presence of tape end it is assumed that the tape cassette 24 has been detached from the tape running device and the flow advances to the step 43. In step 43, the logic unit 14 controls releasing of the reel braking device 13. When both the leader end and the trailer end are not detected in steps 41, 42, then the steps 41, 42 repeat until the detaching of tape cassette 24 is completed.

After fixing the tape cassette 24 in the tape running device, the next three steps are carried out in turn, and a stand-by status for the tape running is obtained:

(1) the reel hub brake which is equipped to the tape cassette itself is released after the operation of the reel brake;

(2) the take-up reel or the feed reel is rotated in order to unsag the tape; and

(3) the reel brake of the take-up reel is released, the tape is drawn from the tape cassette and the tape is contacted to the magnetic rotating head.

During the stand-by status for the tape running, the reel brake of the take-up reel and feed reel are operated in order to prevent the tape from sagging when the apparatus is shaken.

As described above, according to the above embodiment, it is not necessary to provide a special detecting device to detect that the tape cassette 24 is fixed in and detached from the tape running device 25, but it becomes possible to operate and release the reel braking device 13 by using the tape leader end and tape trailer end detecting devices 11, 12.

As it is apparent from the above embodiment, the apparatus of the present invention detects the fixing and detaching of the tape cassette in and out of the tape running device according to output status of the tape leader end detecting device and the tape trailer end detecting device which detect by the transmission of light the transparent leader tape portion and the non-transparent magnetic portion of the tape leader end and the tape trailer end of a tape thereby operating and releasing the reel brake. The apparatus of the present invention has the following effects.

(1) It is not necessary to provide a special detecting device to detect that the tape cassette is fixed and detached in and out of the tape running device.

(2) It is difficult for the tape to cause unnecessary sagging or positional deviation in the cassette half when fixing or detaching the tape cassette in and out of the tape running device.

## Claims

1. A magnetic recording and reproducing apparatus comprising: a first detecting device (11) and a second detecting device (12) utilising light transmission to detect a transparent leader or trailer tape portion in contrast to the non-transparent magnetic tape portion, the transparent portions having a length such that said detecting devices cannot simultaneously detect a transparent portion; characterised by a control device (14) which operates the reel brake (13) when one of said detecting devices (11,12) detects the magnetic tape portion during the insertion of a tape cassette into a tape running device, and which releases the reel brake when both of the detecting devices do not detect the magnetic tape portion, which state is indicative of a removed cassette.

## Patentansprüche

1. Gerät für magnetische Aufzeichnung und Wiedergabe mit: einer ersten Detektiervorrichtung (11) und einer zweiten Detektiervorrichtung (12), die eine Lichttransmission verwenden, um einen transparenten Führungs- oder Vorspannbereich des Bandes im Kontrast mit dem nicht transparenten, magnetischen Bandbereich verwenden, wobei die transparenten Bereiche eine derartige Länge besitzen, daß die Detektiervorrichtungen nicht gleichzeitig einen transparenten Bereich feststellen können; gekennzeichnet durch eine Regelungsvorrichtung (14), die die Radbremse (13) betätigt, wenn eine der Detektiervorrichtungen (11, 12) den magnetischen Bereich während des Einsetzens einer Bandkassette in eine Bandabspielvorrichtung feststellt, und die die Radbremse löst, wenn beide Detektiervorrichtungen nicht den magnetischen Bandbereich feststellen, welcher Zustand eine herausgenommene Kassette anzeigt.

## Revendications

Appareil d'enregistrement et de reproduction magnétique comprenant : un premier dispositif de détection (11) et un deuxième dispositif de détection (12) utilisant la transmission de lumière pour détecter une partie de bande transparente formant une amorce de début ou de fin de bande, les parties transparentes ayant une longueur telle que lesdits dispositifs de détection ne peuvent pas détecter simultanément une partie transparente ; caractérisé par un dispositif de commande (14) qui actionne le frein de bobine (13) lorsque l'un desdits dispositifs de détection (11, 12) détecte la partie de bande magnétique pendant l'insertion d'une cassette de bande dans un dispositif dérouleur de bande et qui relâche le frein de bobine lorsqu'aucun des deux dispositifs de détection ne détecte la partie de bande magnétique, cet état étant indicatif du fait que la cassette a été retirée.

<u>Fig 1</u>

```
  ┌──────────────────┐                      ┌──────────────────┐
  │ TAPE LEADER END  │ 11                   │ TAPE TRAILER END │ 12
  │ DETECTING DEVICE │                      │ DETECTING DEVICE │
  └──────────────────┘                      └──────────────────┘
            │                                         │
            │              ┌──────────────┐ 14        │
            │              │              │           │
            └──────────────▶│    LOGIC    │◀──────────┘
                           │    UNIT      │
                           │              │
                           └──────────────┘
                                  │
                                  │
                                  ▼
                           ┌──────────────┐ 13
                           │ REEL BRAKING │
                           │   DEVICE     │
                           └──────────────┘
```

<u>Fig 2</u>

## Fig 3

ON FIXING OF
A TAPE CASSETTE

Step 31

TAPE
LEADER END?

No

Yes

Step 32

TAPE
TRAILER END?

Yes          No

Step 33

OPERATION
OF
REEL BRAKE

END

Fig 4

ON DETACHING
A TAPE CASSETTE

Step 41

TAPE LEADER END?

No

Yes

Tape leader end?

Step 42

TAPE TRAILER END?

No

Yes

Step 43

RELEASE OF REEL BRAKE

END

Fig 5

1

2

REEL BRAKING DEVICE